# EUROPEAN PATENT APPLICATION

(11) **EP 4 553 323 A1**
(43) Date of publication of application: **14.05.2025**
(21) Application number: 24210094.9
(22) Date of filing: 31.10.2024
(51) Int. Cl.: F15B 15/26, B64C 13/40

(54) **ACTUATOR UNIT**

(30) Priority: 09.11.2023 JP 2023191657
(71) Applicant: NABTESCO CORPORATION, Chiyoda-ku Tokyo 102-0093 (JP)
(72) Inventor: ITO, Koji, Tokyo (JP)
(74) Representative: Dennemeyer & Associates S.A.

(57) **Abstract**

An actuator unit (10) includes first and second link mechanisms (110, 120). The first link mechanism has first and second arms (111, 112) that extend in first and second directions when viewed in a direction parallel to an axis of rotation (P1). The first arm is connected at a first connection point (P2) to a power source (12) for powering the first link mechanism. The second arm is connected at a second connection point (P3) to the second link mechanism. The second link mechanism is connected at a third connection point (P4) to a locking collar (60). The locking collar is configured to reciprocate as the first link mechanism rotates in a reciprocating manner. The distance from the first connection point to the axis of rotation is greater than the distance from the second connection point to the axis of rotation.

## Description

### TECHNICAL FIELD

The present disclosure relates to an actuator unit.

### BACKGROUND

United States Patent No. 3,470,793 ("the `793 Patent") discloses an actuator including a tubular cylinder, and an output rod movable along the central axis of the cylinder. The actuator also includes a first locking member and a second locking member. The first locking member is fixedly attached to the output rod. The first locking member has a tubular portion centered on the central axis of the cylinder. The inner surface of the tubular portion is a tapered surface the diameter of which increases toward one side in the direction along the central axis of the cylinder. The second locking member is configured to reciprocate relative to the interior space of the tubular portion. The second locking member is shaped like a truncated circular cone centered on the central axis of the cylinder. In other words, the outer surface of the second locking member is a tapered surface the diameter of which increases toward one side in the direction along the central axis. With contact being established between the tapered surfaces of the first and second locking members, the outer surface of the first locking member is pressed against the inner surface of the cylinder. This resultantly makes the first locking member immovable. Accordingly, the output rod is immovably locked.

According to the technology disclosed in the `793 Patent, the force acting to restrict the movement of the output rod depends on the force acting to press the second locking member against the first locking member. Therefore, a substantial force needs to be applied to press the second locking member against the first locking member in order to overcome the force acting to cause the output rod to move and restrict the movement of the output rod. The second locking member can be moved with a substantial force only if a large-scale mechanism is provided to move the second locking member.

### SUMMARY

One aspect of the present disclosure provides an actuator unit including: a main rod movable in an axial direction; a lock mechanism configured to restrict the main rod from moving; a first link mechanism rotatable on an axis of rotation; and a second link mechanism connected to the first link mechanism and the lock mechanism. The locking mechanism includes: a tubular locking member into which the main rod is inserted, the locking member having an outer surface that is sloped such that a distance between a central axis of the main rod and the outer surface decreases toward one side in the axial direction; and a tubular locking collar into which the main rod and the locking member are inserted, the locking member having an inner surface that is sloped such that a distance between the central axis of the main rod and the inner surface decreases toward one side in the axial direction. The first link mechanism includes: a first arm extending from the axis of rotation in a first direction when viewed in a direction parallel to the axis of rotation; and a second arm extending from the axis of rotation in a second direction different than the first direction when viewed in a direction parallel to the axis of rotation. The first arm is connected at a first connection point to a power source for applying power to the first link mechanism. The second arm is connected at a second connection point to the second link mechanism. The second link mechanism is connected at a third connection point to the locking collar. The locking collar is configured to reciprocate in the axial direction as the first link mechanism rotates in a reciprocating manner. When viewed in a direction parallel to the axis of rotation, a distance from the first connection point to the axis of rotation is greater than a distance from the second connection point to the axis of rotation.

Due to the relationship between the lengths of the first and second arms, the first link mechanism described above can use the principle of leverage, thereby increasing the power input from the power source and then transmit the increased power to the second link mechanism, and thus to the locking collar. In the implementation, the power from the power source can be increased and then transmitted to the locking collar. Thus, an excessively large-scale power source is not required as the power source.

The second link mechanism may convert a force acting to move the second connection point in a direction orthogonal to the axial direction into a force acting to move the inner surface of the locking collar toward the outer surface of the locking member in the axial direction.

When viewed in a direction parallel to the axis of rotation, an acute angle formed between a line segment connecting the second and third connection points and the axial direction may be 30 degrees or less regardless of where the locking collar is positioned.

When the locking mechanism is in a locking state, the outer surface of the locking member may be in contact with the inner surface of the locking collar. When viewed in a direction parallel to the axis of rotation, an angle formed between a line segment connecting the first connection point and the axis of rotation and a direction of a force exerted by the power source on the first arm may be from 85 degrees to 95 degrees when the locking mechanism is in the locking state.

The actuator unit may further include an actuator serving as the power source, the actuator being configured to be operated by fluid pressure. The actuator may have: a cylinder configured to receive a fluid therein; a piston configured to reciprocate within the cylinder; a rod connected to the piston and the first arm; and a spring member configured to apply a force to the piston. When the spring member applies a force to the piston to move the piston, the inner surface of the locking collar may move toward the outer surface of the locking member.

The main rod may be configured to actuate a flight control surface of an aircraft.

### ADVANTAGEOUS EFFECTS

According to the above-described technical idea, the main rod can be locked without requiring an excessively large-scale power source.

### BRIEF DESCRIPTION OF THE DRAWINGS

Fig. 1 is a perspective view of an actuator unit.
Fig. 2 is a sectional view of a first actuator.
Fig. 3 is a sectional view of a second actuator.
Fig. 4 is a side view of the actuator unit with a locking collar being at a normal position.
Fig. 5 is a side view of the actuator unit with the locking collar being at a locking position.
Fig. 6 is a sectional view showing a portion of the first actuator with the locking collar being at the locking position.

### DESCRIPTION OF THE PREFERRED EMBODIMENTS

### <Actuator Unit>

The following describes an embodiment of an actuator unit applied to an aircraft with reference to the drawings. The actuator unit described below is designed to operate a flight control surface of an aircraft.

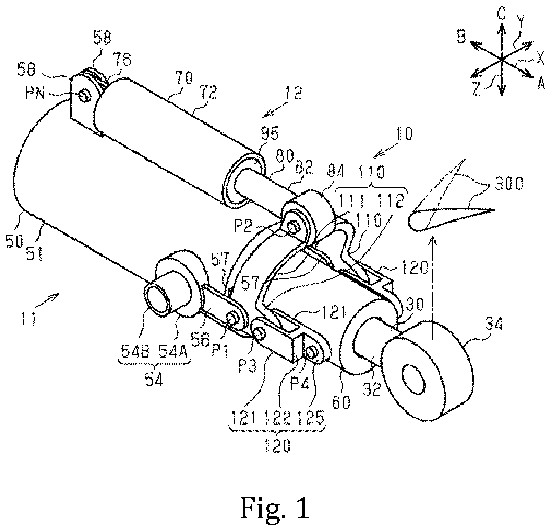

As shown in Fig. 1, the actuator unit 10 has a first actuator 11, a second actuator 12, a pair of first links 110, and a pair of second links 120. The first links 110 constitute a first link mechanism. The second links 120 constitute a second link mechanism.

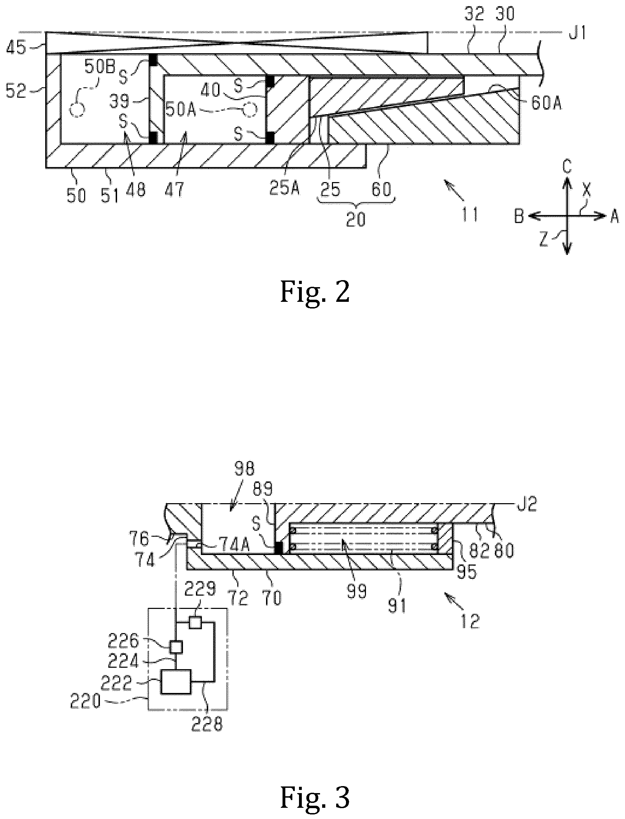

As shown in Figs. 1 and 2, the first actuator 11 includes a main cylinder 50, a main rod 30, a main piston 39, a fixture member 40, a locking mechanism 20, and a housing member 45.

### <Main Cylinder>

As shown in Fig. 2, the main cylinder 50 has a circumferential wall 51 and a bottom wall 52. As shown in Fig. 1, the main cylinder 50 has a pair of trunnions 54, a pair of first extension pieces 56, a pair of second extension pieces 57, and a pair of connecting pieces 58.

As shown in Fig. 2, the circumferential wall 51 is shaped like a circular cylinder. Hereinafter, the central axis of the circumferential wall 51 is referred to as a main cylinder axis J1. The term "first axis X" refers to an axis parallel to the main cylinder axis J1. The terms "second axis Y" and "third axis Z" respectively refer to a specific axis orthogonal to the first axis X, and an axis orthogonal to both the first and second axes X and Y. Furthermore, the terms "first direction A" and "second direction B" denote the opposite directions in the first axis A. Furthermore, the term "third direction C" refers to one of the two directions along the third axis Z.

As shown in Fig. 2, the bottom wall 52 is shaped like a disc. The bottom wall 52 closes the end of the circumferential wall 51 facing the second direction B. As shown in Fig. 1, the two trunnions 54 are arranged at the end of the circumferential wall 51 facing the first direction A. The two trunnions 54 face each other in the direction extending along the second axis Y with the circumferential wall 51 being sandwiched therebetween. The two trunnions 54 are symmetrically positioned across the circumferential wall 51. Similarly, the two first extension pieces 56 are symmetrically arranged so as to face each other in the direction extending along the second axis Y with the circumferential wall 51 being sandwiched therebetween. The same is true for the two second extension pieces 57.

The trunnions 54 each have a large-diameter portion 54A and a small-diameter portion 54B. The large- and small-diameter portions 54A and 54B are both shaped like a circular cylinder. The large-diameter portion 54A protrudes outwardly from the outer surface of the circumferential wall 51. The small-diameter portion 54B protrudes outwardly from the end surface of the large-diameter portion 54A that faces away from the circumferential wall 51. The outer diameter of the small-diameter portion 54B is less than that of the large-diameter portion 54A. The central axis of the small-diameter portion 54B coincides with that of the large-diameter potion 54A. The small-diameter portion 54B is connected with the fuselage of the aircraft.

The first extension pieces 56 are connected to the large-diameter portions 54A of the trunnions 54. The first extension pieces 56 are shaped like a plate having a thickness in the direction along the second axis Y. The first extension pieces 56 protrude toward the first direction A from the ends of the large-diameter portions 54A that are opposite to the ends connected to the circumferential wall 51. The protruding ends of the first extension pieces 56 extend toward the first direction A beyond the circumferential wall 51. The first extension pieces 56 each have a through hole 56H. The through hole 56H is located outside the circumferential wall 51 on the first direction A side. The through hole 56H passes through the first extension piece 56 in the direction extending along the second axis Y. In the direction extending along the third axis Z, the central axis of the through hole 56H is at the same position as the main cylinder axis J1.

As shown in Fig. 1, the second extension pieces 57 are connected to the end surface of the circumferential wall 51 facing the first direction A. Like the first extension pieces 56, the second extension pieces 57 are shaped like a plate having a thickness in the direction along the second axis Y. The second extension pieces 57 protrude toward the first direction A from the end surface of the circumferential wall 51. Toward the first direction A, the protruding ends of the second extension pieces 57 reach the same position as do the first extension pieces 56. The second extension pieces 57 each have a through hole. The through hole passes through the second extension piece 57 in the direction along the second axis Y. The central axis of the through hole coincides with that of the through hole 56H of the first extension piece 56.

The connecting pieces 58 are connected to the end of the circumferential wall 51 facing the second direction B. The two connecting pieces 58 face each other in the direction extending along the second axis Y with the main cylinder axis J1 being sandwiched therebetween. The two connecting pieces 58 are symmetrically positioned across the main cylinder axis J1. The connecting pieces 58 are shaped like a plate having a thickness in the direction along the second axis Y. The connecting pieces 58 protrude toward the third direction C from the outer surface of the circumferential wall 51. The connecting pieces 58 each have a through hole. The through hole passes through the connecting piece 58 in the direction along the second axis Y. The central axes of the through holes of the two connecting pieces 58 coincide with each other.

### <Main Rod>

As shown in Figs. 1 and 2, the main rod 30 has a main rod body 32 and a main end member 34. The main rod body 32 is tubular. The outer diameter of the main rod body 32 is less than the inner diameter of the circumferential wall 51 of the main cylinder 50. The main rod body 32 extends in the direction along the first axis X. As shown in Fig. 2, a portion of the main rod body 32 is located inside the circumferential wall 51 of the main cylinder 50. The remaining portion of the main rod body 32 protrudes out of the circumferential wall 51 through the opening of the circumferential wall 51 of the main cylinder 50 facing the first direction A. The central axis of the main rod body 32 coincides with the main cylinder axis J1.

As shown in Fig. 1, the main end member 34 is connected to the main rod body 32. The main end member 34 is located at the end of the main rod body 32 facing the first direction A. Stated differently, the main end member 34 is located outside the circumferential wall 51 of the main cylinder 50. The main end member 34 is shaped like a ring plate. The main end member 34 is connected to the flight control surface 300 of the aircraft.

### <Main Piston>

As shown in Fig. 2, the main piston 39 is connected to the main rod body 32. The main piston 39 is provided at the end of the main rod body 32 facing the second direction B. Stated differently, the main piston 39 is located inside the circumferential wall 51 of the main cylinder 50. The main piston 39 extends outwardly from the outer surface of the main rod body 32 in the radial direction centered on the main rod body 32. In plan view of the main piston 39 in the direction along the first axis X, the main piston 39 is annularly shaped. The outer diameter of the main piston 39 is slightly less than the inner diameter of the circumferential wall 51 of the main cylinder 50. An annular seal ring S is attached to the outer surface of the main piston 39. The seal ring S seals the gap between the main piston 39 and the circumferential wall 51. Similarly, an annular seal ring S is attached to the inner surface of the main piston 39. The seal ring S seals the gap between the main piston 39 and a housing member 45, which is described below. The main piston 39 is configured to, together with the main rod 30, reciprocate inside the circumferential wall 51 of the main cylinder 50 in the direction along the first axis X.

### <Fixture Member>

As shown in Fig. 2, the fixture member 40 is tubular. The outer diameter of the fixture member 40 is approximately equal to the inner diameter of the circumferential wall 51 of the main cylinder 50. The inner diameter of the fixture member 40 is slightly greater than the outer diameter of the main rod body 32.

The fixture member 40 is located inside the circumferential wall 51 of the main cylinder 50. The central axis of the fixture member 40 coincides with the main cylinder axis J1. The outer surface of the fixture member 40 is fixedly attached onto the inner surface of the circumferential wall 51. In the direction along the first axis X, the fixture member 40 is located on the first direction A side with respect to the middle of the circumferential wall 51. In the direction along the first axis X, the end of the fixture member 40 that faces the first direction A is located on the second direction B side with respect to the end of the circumferential wall 51 that faces the first direction A. A certain space is thus left between the end of the fixture member 40 that faces the first direction A and the end of the circumferential wall 51 that faces the first direction A. A seal ring S is attached to the outer surface of the fixture member 40. The seal ring S seals the gap between the fixture member 40 and the circumferential wall 51.

The fixture member 40 has a hole at the center, into which the main rod body 32 is inserted. The main rod body 32 penetrates the fixture member 40. The main rod body 32 is configured to slide relative to the inner surface of the fixture member 40. An annular seal ring S is attached to the inner surface of the fixture member 40. The seal ring S seals the gap between the fixture member 40 and the main rod body 32.

### <Locking Mechanism>

As shown in Fig. 2, the locking mechanism 20 has a locking member 25 and a locking collar 60.

The locking member 25 is tubular. Note that, however, the outer surface 25A of the locking member 25 is tapered. Specifically, the outer diameter of the locking member 25 varies in the direction along the central axis of the locking member 25. The maximum value of the outer diameter of the locking member 25 is less than the outer diameter of the fixture member 40. The inner diameter of the locking member 25 is slightly greater than the outer diameter of the main rod body 32.

A portion of the locking member 25 is located inside the circumferential wall 51 of the main cylinder 50. The central axis of the locking member 25 coincides with that of the fixture member 40 and thus with the main cylinder axis J1. In the direction along the first axis X, the locking member 25 is located on the first direction A side with respect to the fixture member 40. The end surface of the locking member 25 that faces the second direction B is in contact with the end surface of the fixture member 40 that faces the first direction A. The locking member 25 extends from the end surface of the fixture member 40 to reach the outside of the circumferential wall 51 of the main cylinder 50.

The locking member 25 has a hole at the center, into which the main rod body 32 is inserted. In other words, the main rod body 32 penetrates the locking member 25. As mentioned above, the inner diameter of the locking member 25 is slightly greater than the outer diameter of the main rod body 32. Because of this, there is a gap between the locking member 25 and the main rod body 32 in a normal circumstance. This gap is shown in an exaggerated manner in Fig. 2. The locking member 25 is elastically deformable to some extent. As pressed toward the main rod body 32, the locking member 25 can exert a braking force on the main rod body 32.

As mentioned above, the outer surface 25A of the locking member 25 is tapered. Specifically, the outer surface 25A of the locking member 25 is sloped such that the distance between the outer surface 25A and the main cylinder axis J1 decreases toward the first direction A.

### <Locking Collar>

As shown in Fig. 2, the locking collar 60 is tubular. Note that, however, the inner surface 60A of the locking collar 60 is tapered. Specifically, the inner diameter of the locking collar 60 varies in the direction along the central axis of the locking collar 60. The inner diameter of the locking collar 60 will be described in detail below. The outer diameter of the locking collar 60 is slightly less than the inner diameter of the circumferential wall 51 of the main cylinder 50.

The locking collar 60 is joined with the circumferential wall 51 of the main cylinder 50. With the locking collar 60 being joined with the circumferential wall 51, the central axis of the locking collar 60 coincides with the main cylinder axis J1. A portion of the locking collar 60 is located inside the circumferential wall 51. Specifically, a portion of the locking collar 60 is located in a portion of the circumferential wall 51 that is on the first direction A side with respect to the fixture member 40. The remaining portion of the locking collar 60 protrudes out of the circumferential wall 51 through the opening of the circumferential wall 51 facing the first direction A. The outer surface of the locking collar 60 is configured to slide relative to the inner surface of the circumferential wall 51.

The inner diameter of the locking collar 60 is determined to satisfy the following relationship. Here, the inner surface 60A of the locking collar 60 is sloped such that the distance between the inner surface 60A and the main cylinder axis J1 decreases toward the first direction A. The inner diameter of the locking collar 60 at its end facing the second direction B is less than the outer diameter of the locking member 25 at its end facing the second direction B, and greater than the outer diameter of the locking member 25 at its end facing the first direction A. The inner diameter of the locking collar 60 at its end facing the first direction A is less than the outer diameter of the locking member 25 at its end facing the first direction A, and greater than the outer diameter of the main rod body 32. With the inner and outer diameters satisfying these relationships, a portion of the locking member 25 is inserted into the center hole in the locking collar 60 through the opening of the locking collar 60 facing the second direction B. In a normal circumstance, the inner surface 60A of the locking collar 60 is not in contact with the outer surface 25A of the locking member 25, so that a gap is left between them. In addition, the main rod body 32, which passes through the locking member 25, is inserted into the center hole in the locking collar 60. The main rod body 32 passes through the locking collar 60. Fig. 2 shows the gap between the inner surface 60A of the locking collar 60 and the outer surface 25A of the locking member 25 in an exaggerated manner.

### <Housing Member>

As shown in Fig. 2, the housing member 45 is shaped like a circular cylinder. The housing member 45 is hollow. The housing member 45 houses a position sensor configured to detect the position of the main rod body 32 in the direction along the first axis X. The outer diameter of the housing member 45 is slightly less than the inner diameter of the main rod body 32.

The housing member 45 is located in the center hole in the main rod body 32. The central axis of the housing member 45 coincides with the central axis of the main rod body 32. In the direction along the first axis X, the end of the housing member 45 facing the first direction A is located on the first direction A side with respect to the end of the fixture member 40 facing the first direction A. A portion of the housing member 45 protrudes beyond the main rod body 32 toward the second direction B, to reach the bottom wall 52 of the main cylinder 50. The housing member 45 is secured at the bottom wall 52.

### <Fluid Chamber>

In the interior space within the circumferential wall 51 of the main cylinder 50, a fluid chamber is compartmented on the second direction B side with respect to the fixture member 40. The fluid chamber is bisected by the main piston 39 into a first fluid chamber 47 and a second fluid chamber 48. The first fluid chamber 47 is located on the first direction A side with respect to the main piston 39. The first fluid chamber 47 is defined by the main piston 39, the main rod body 32, the circumferential wall 51 of the main cylinder 50, and the fixture member 40. The second fluid chamber 48 is located on the second direction B side with respect to the main piston 39. The second fluid chamber 48 is defined by the main piston 39, the circumferential and bottom walls 51 and 52 of the main cylinder 50, and the housing member 45.

The main cylinder 50 has a first fluid port 50A and a second fluid port 50B. The first and second fluid ports 50A and 50B both provide communication between the interior and exterior spaces of the circumferential wall 51. The first fluid port 50A is in communication with the first fluid chamber 47. The second fluid port 50B is in communication with the second fluid chamber 48. Although not shown in the drawings, the first and second fluid ports 50A and 50B are both connected to a fluid circuit that is external to the circumferential wall 51. The fluid circuit includes an electric pump for pumping hydraulic oil, a flow path through which the hydraulic oil is distributed, and a valve for switching the flow path, to constitute a mechanism for supplying and discharging the hydraulic oil. The fluid circuit supplies and drains the hydraulic oil to/from the first and second fluid chambers 47 and 48 through the first and second fluid ports 50A and 50B, respectively. The difference in hydraulic pressure between the first fluid chamber 47 and the second fluid chamber 48 can cause the main piston 39, and eventually the main rod body 32, to move in the direction along the first axis X. At the same time, the flight control surface 300, which is connected to the main rod 30, can operate. When moving in the direction along the first axis X, the main rod body 32 moves relative to the main cylinder 50, fixture member 40, locking member 25, and locking collar 60.

### <Second Actuator>

As shown in Figs. 1 and 3, the second actuator 12 includes a sub-cylinder 70, a sub-rod 80, a sub-piston 89, a spring member 91, and a closure member 95.

As shown in Fig. 3, the sub-cylinder 70 has a circumferential wall 72, a bottom wall 74 and an extension wall 76. The circumferential wall 72 is shaped like a circular cylinder. The bottom wall 74 is shaped like a disc. The central axis of the circumferential wall 72 is referred to as a sub-cylinder axis J2. The bottom wall 74 closes one of the ends of the circumferential wall 72 in the direction along the sub-cylinder axis J2. The bottom wall 74 has a supply and discharge port 74A. The supply and discharge port 74A passes through the bottom wall 74. The supply and discharge port 74A is connected to a fluid circuit 220, which is located outside the circumferential wall 72. The extension wall 76 is located outside the circumferential wall 51. The extension wall 76 protrudes from the bottom wall 74. The extension wall 76 has a through hole. The through hole passes through the extension wall 76. The end of the circumferential wall 72 that is opposite to the bottom wall 74 in the direction along the sub-cylinder axis J2 is closed by the closure member 95.

As shown in Figs. 1 and 3, the sub-rod 80 has a sub-rod body 82 and a sub-end member 84. The sub-rod body 82 is shaped like a rod. The sub-rod body 82 extends in the direction along the sub-cylinder axis J2. A portion of the sub-rod body 82 is located inside the circumferential wall 72 of the sub-cylinder 70. The remaining portion of the sub-rod body 82 protrudes through the closure member 95 and out of the circumferential wall 72 of the sub-cylinder 70. The central axis of the sub-rod body 82 coincides with the sub-cylinder axis J2.

As shown in Fig. 1, the sub-end member 84 is connected to the end of the sub-rod body 82 that is externally exposed beyond the circumferential wall 72. The sub-end member 84 is shaped like a ring plate. As shown in Fig. 3, the sub-piston 89 is connected to the sub-rod body 82. In the direction along the sub-cylinder axis J2, the sub-piston 89 is located at the end of the sub-rod body 82 that is housed in the circumferential wall 72. In other words, the sub-piston 89 is located inside the circumferential wall 72 of the sub-cylinder 70. The sub-piston 89 extends outwardly from the outer surface of the sub-rod body 82 in the radial direction centered on the sub-rod body 82. In plan view of the sub-piston 89 in the direction along the sub-cylinder axis J2, the sub-piston 89 is circularly shaped. The outer diameter of the sub-piston 89 is slightly less than the inner diameter of the circumferential wall 72 of the sub-cylinder 70. An annular seal ring S is attached to the outer surface of the sub-piston 89. The seal ring S seals the gap between the sub-piston 89 and the circumferential wall 72 of the sub-cylinder 70. The sub-piston 89 is configured to, together with the sub-rod 80, reciprocate inside the sub-cylinder 70 in the direction along the sub-cylinder axis X.

The sub-piston 89 bisects the interior space within the circumferential wall 72 of the sub-cylinder 70 into compartments arranged next to each other in the direction along the sub-cylinder axis J2. In the interior space within the circumferential wall 72 of the sub-cylinder 70, the compartment facing the bottom wall 74 with respect to the sub-piston 89 is referred to as a fluid chamber 98, into/from which hydraulic oil is supplied and discharged through the supply and discharge port 74A in the bottom wall 74. The fluid chamber 98 is defined by the sub-piston 89, and the circumferential and bottom walls 72 and 74 of the sub-cylinder 70. In the interior space within the circumferential wall 72, the other compartment facing the closure member 95 with respect to the sub-piston 89 is a spring housing chamber 99. The spring housing chamber 99 is defined by the sub-piston 89, circumferential wall 72 of the sub-cylinder 70, sub-rod body 82 and closure member 95.

The spring member 91 is helical. The spring member 91 is provided in the spring housing chamber 99. The spring member 91 surrounds the sub-rod body 82. One end of the spring member 91 is in contact with the closure member 95. The other end of the spring member 91 is in contact with the sub-piston 89. The spring member 91 is configured to press the sub-piston 89 toward the bottom wall 74 of the sub-cylinder 70 in the direction along the sub-cylinder axis J2. The sub-piston 89 can move in the interior space within the circumferential wall 51 of the sub-cylinder 70 in a manner determined by the relationship between the force applied by the spring member 91 and the hydraulic pressure in the fluid chamber 98. In the following, the phrase "the sub-piston 89, and eventually the sub-rod 80, is at a first position" means that the sub-piston 89 is as far as possible form the bottom wall 74. The phrase "the sub-piston 89, and eventually the sub-rod 80, is at a second position" means that the sub-piston 89 is as close as possible to the bottom wall 74.

As shown in Fig. 1, the second actuator 12 is connected to the first actuator 11. The sub-cylinder 70 is located on the third direction C side with respect to the main cylinder 50. In plan view of the actuator unit 10 in the direction along the second axis Y, the sub-cylinder 70 is arranged in parallel with the main cylinder 50. Viewing the actuator unit 10 in plan view in the direction along the second axis Y is equivalent to viewing the actuator unit 10 in plan view in a direction parallel to the second axis Y. The extension wall 76 of the sub-cylinder 70 is interposed between the two connecting pieces 58 of the main cylinder 50. The through holes in the two connecting pieces 58 and the thorough hole in the extension wall 76 are penetrated by a connecting pin PN. The connecting pin PN is shaped like a circular cylinder. The central axis of the connecting pin PN extends along the second axis Y. Although not shown, the connecting pin PN is held in place by a nut or the like. The sub-cylinder 70 is rotatable around the connecting pin PN. With the sub-cylinder 70 being connected to the main cylinder 50, the sub-cylinder axis J2 is generally parallel to the main cylinder axis J1.

As shown in Fig. 3, the supply and discharge port 74A of the second actuator 12 described above is connected to the fluid circuit 220 for feeding fluid pressure to the second actuator 12. The fluid circuit 220 can feed a predetermined hydraulic pressure to or drain hydraulic pressure from the fluid chamber 98 of the sub-cylinder 70. For example, the fluid circuit 220 has a tank 222, a supply channel 224, an electric pump 226, a return channel 228, and a relief valve 229. The tank 222 stores hydraulic oil. The supply channel 224 connects the tank 222 to the supply and discharge port 74A. The electric pump 226 is located in the middle of the supply channel 224. The electric pump 226 pumps the hydraulic oil from the tank 222. The return channel 228 connects, to the tank 222, the downstream portion of the supply channel 224 with respect to the electric pump 226. The relief valve 229 opens the channel defined by the return channel 228 only when the hydraulic pressure in the downstream portion of the supply channel 224 with respect to the electric pump 226 is equal to or higher than a predetermined hydraulic pressure. For example, in the above-described fluid circuit 220, a predetermined hydraulic pressure is built in the fluid chamber 98 as a result of continuous driving of the electric pump 226. Upon the end of the driving of the electric pump 226, no hydraulic pressure is applied to the fluid chamber 98. The predetermined hydraulic pressure is set to such a level that the force acting on the sub-piston 89 can be sufficiently greater than the elastic force produced by the spring member 91.

### <First Link>

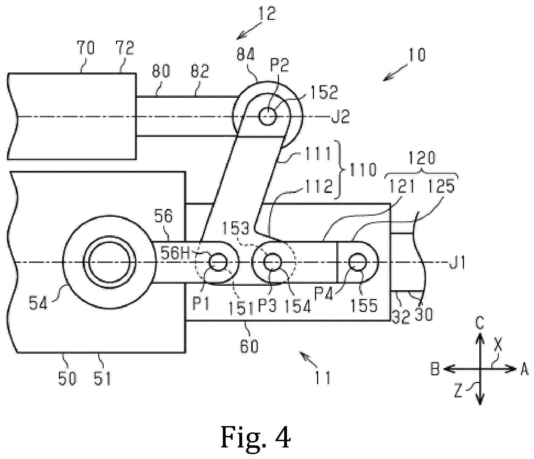

As shown in Fig. 1, the two first links 110 are symmetrically arranged to face each other in the direction extending along the second axis Y with the main cylinder axis J1 being sandwiched therebetween. The first links 110 are each a long plate curved into an arc as a whole. The following now describes how the first links 110 are configured, with reference to a plan view of the first links 110 in the direction along the second axis Y. As shown in Fig. 4, the first links 110 are coupled with the sub-end member 84. The first links 110 are each V-shaped as a whole. Specifically, the first links 110 each have a first arm 111 and a second arm 112 corresponding to the two sides of the V shape. The apex of the V-shape of the first link 110 is referred to as the base end. The first arm 111 extends like a straight line from the base end generally toward the third direction C. The second arm 112 extends from the base end in a different direction than the first arm 111. The second arm 112 extends from the base end generally toward the first direction A. The second arm 112 is inclined at an acute angle relative to the first arm 111. Specifically, from among the angles formed by the direction in which the second arm 112 extends and the direction in which the first arm 11 extends, the angle that faces the first and third directions A and C is an acute angle. The extended dimension of the second arm 112 is less than that of the first arm 111.

The first link 110 has three through holes. A first one of the three through holes, or a first through hole 151, is located at the base end. A second one of the three through holes, or a second through hole 152, is located at the end of the first arm 111 that is opposite to the base end. A third one of the three through holes, or a third through hole 153, is located at the end of the second arm 112 that is opposite to the base end. The through holes pass through the first link 110 in the direction along the second axis Y.

As shown in Figs. 1 and 4, the first link 110 is connected to both the first and second actuators 11 and 12 via a plurality of pins. The pins are shaped like a circular cylinder. With the first link 110 being connected to the actuators, the first through hole 151 of the first link 110 is located between the first extension piece 56 and the second extension piece 57 of the main cylinder 50. The first through hole 151, through hole 56H in the first extension piece 56, and through hole in the second extension piece 57 are penetrated by a first pin P1. Stated differently, the first arm 111 is connected to the circumferential wall 51 of the main cylinder 50 via the first and second extension pieces 56 and 57. The central axis of the first pin P1 extends along the second axis Y. Although not shown, the first pin P1 is held in place by a nut or the like. The first arm 111 is rotatable about the first pin P1. The first pin P1 constitutes the axis of rotation.

With the first link 110 being connected to the actuators, the second through hole 152 in the first arm 111 of the first link 110 is positioned on the third direction C side with respect to the first through hole 151. The second through hole 152 faces the sub-end member 84 of the sub-rod 80. The second through hole 152, and the center hole in the sub-end member 84 are penetrated by a second pin P2. In other words, the first arm 111 is coupled with the sub-rod body 82 via the sub-end member 84. As shown in Fig. 1, the second pin P2 passes through the second through holes 152 of the two first links 110 facing each other in the direction along the second axis Y. Although not shown, the second pin P2 is held in place by a nut or the like. The first arm 111 is rotatable relative to the second pin P2.

As described above, the first arm 111 bridges the first and second pins P1 and P2. Specifically, as shown in Fig. 4, in plan view of the first link 110 in the direction along the second axis Y, the first arm 111 extends from the first pin P1 to the second pin P2. Since the first link 110 is V-shaped in plan view of the first link 110 in the direction along the second axis Y, the second arm 112 extends from the first pin P1 in a different direction than the first arm 111.

With the first link 110 being connected to the actuators, the third through hole 153 in the second arm 112 of the first link 110 is positioned on the first direction A side with respect to the second through hole 152. How other components are connected in relation with the third through hole 153 is described in relation to the second link 120.

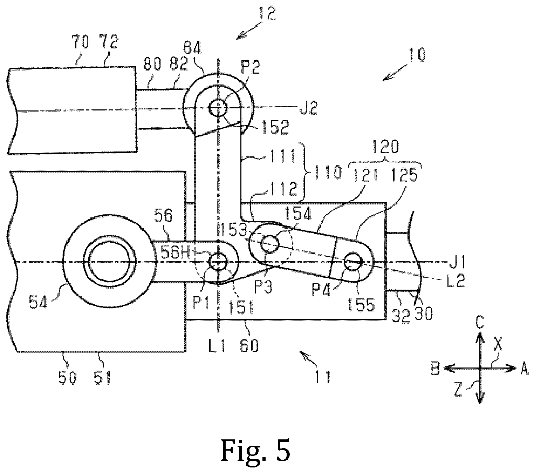

As shown in Fig. 5, the second through hole 152 in the first link 110, and thus the second pin P2, is where the first arm 111 is connected to the sub-rod 80. In plan view of the actuator unit 10 in the direction along the second axis Y, the line segment connecting the central axis of the second through hole 152 and the central axis of the first pin P1 is referred to as a first line segment L1. When the sub-rod 80 is at the second position, the second pin P2 is at the same position as the first pin P1 in the direction along the first axis X, as shown in Fig. 5. This means that, when the sub-rod 80 is at the second position, the first line segment L1 extends along the third axis Z. As the sub-rod 80 moves from the first position to the second position, the first link 110 accordingly rotates. During the rotation, the second pin P2 gradually moves toward the third direction C to an extent determined by the extended dimension of the first arm 111. As a result of the movement of the second pin P2 toward the third direction C, the sub-rod 80 including the sub-end member 84, and thus the sub-cylinder 70, rotates slightly toward the third direction C about the connecting pin PN. As shown in Fig. 5, when the sub-rod 80 reaches the second position, the sub-cylinder axis J2 is slightly sloped with respect to the main cylinder axis J1. Note that the slope is less than 5 degrees. The direction in which the sub-cylinder axis J2 extends coincides with the direction of the force exerted by the sub-rod 80 on the first arm 111. In other words, in plan view of the actuator unit 10 in the direction along the second axis Y, the angle between the first line segment L1 and the direction of the force exerted by the sub-rod 80 on the first arm 111 is from 85 degrees to 95 degrees.

### <Second Link>

As shown in Fig. 1, the two second links 120 are symmetrically arranged to face each other in the direction extending along the second axis Y with the main cylinder axis J1 being sandwiched therebetween. The second links 120 are connected to the first links 110. The second links 120 each have two support pieces 121, a connecting piece 122, and a protruding piece 125. The two support pieces 121 are spaced apart in the direction along the second axis Y. The two support pieces 121 are both shaped like a plate having a thickness in the direction along the second axis Y. As shown in Fig. 4, in plan view of the support pieces 121 in the direction along the second axis Y, the support pieces 121 are substantially shaped like a rectangle. The support pieces 121 each have a fourth through hole 154. The fourth through hole 154 is positioned at one of the ends of the support piece 121 in the longitudinal direction. The fourth through hole 154 passes through the support piece 121 in the direction along the second axis Y. The central axes of the fourth through holes 154 of the two support pieces 121 are coincident on each other. As shown in Fig. 1, the connecting piece 122 connects the other ends of the two support pieces 121 that are opposite to the fourth through holes 154. The protruding piece 125 protrudes from the connecting piece 122 so as to face away from the support pieces 121. The protruding piece 125 is shaped like a plate having a thickness in the direction along the second axis Y. As shown in Fig. 4, the protruding piece 125 has a fifth through hole 155. The fifth through hole 155 passes through the protruding piece 125 in the direction along the second axis Y.

The second link 110 is connected to the first link 110 and also to the first actuator 11 by means of a plurality of cylindrical pins, like the first link 110. As shown in Fig. 4, with the second link 120 being connected to them, the two support pieces 121 are located on the second direction B side with respect to the protruding piece 125. As shown in Figs. 1 and 4, the second arm 112 of the first link 110 is located between the two support pieces 121. The fourth through holes 154 in the two support pieces 121 and the third thorough hole 153 in the second arm 112 are penetrated by a third pin P3. In other words, the second link 120 is connected to the second arm 112 of the first link 110. The central axis of the third pin P3 extends along the second axis Y. Although not shown, the third pin P3 is held in place by a nut or the like. The second arm 112 of the first link 110 is rotatable relative to the third pin P3.

With the second link 120 being connected to the first link 110 and first actuator 11, the protruding piece 125 faces the outer surface of the locking collar 60. The fifth through hole 155 in the protruding piece 125 is penetrated by a fourth pin P4. The fourth pin P4 is fixedly attached to the outer surface of the locking collar 60. The central axis of the fourth pin P4 extends along the second axis Y. In the direction extending along the third axis Z, the central axis of the fourth pin P4 is at the same position as the main cylinder axis J1. Although not shown, the fourth pin P4 is held in place by a nut or the like. The second link 120 is rotatable about the fourth pin P4. Thus, the second link 120 is connected to the locking collar 60.

As the components are connected as described above, the second through hole 152 in the first arm 111, and thus the second pin P2, is where the first arm 111 is connected to the sub-rod 80 (first connection point), as shown in Fig. 4. In plan view of the actuator unit 10 in the direction along the second axis Y, the distance from this connection point to the first pin P1 is referred to as a first distance. The third through hole 153 in the second arm 112, and thus the third pin P3, is where the second arm 112 is connected to the second link 120 (second connection point). In plan view of the actuator unit 10 in the direction along the second axis Y, the distance from this connection point to the first pin P1 is referred to as a second distance. The first distance is greater than the second distance due to the relationship between the extended dimensions of the first and second arms 111 and 112 described above.

As described above, the third through hole 153 in the first link 110 is where the second arm 112 of the first link 110 is connected to the second link 120. The fifth through hole 155 in the second link 120, and thus the fourth pin P4, is where the second link 120 is connected to the locking collar 60 (third connection point). In plan view of the actuator unit 10 in the direction along the second axis Y, the line segment connecting the central axis of the third through hole 153 and the central axis of the fifth through hole 155 in the second link 120 is referred to as a second line segment L2. In plan view of the actuator unit 10 in the direction along the second axis Y, the acute angle formed by the second line segment L2 and the main cylinder axis J1 is referred to as a link angle. When the sub-rod 80 is at the first position, the first pin P1, third pin P3 and fourth pin P4 are at the same position in the direction along the third axis Z, as shown in Fig. 4. In plan view of the actuator unit 10 in the direction along the second axis Y, the first pin P1, third pin P3 and fourth pin P4 are aligned on the main cylinder axis J1. In other words, when the sub-rod 80 is at the first position, the link angle is zero degrees.

On the other hand, when the sub-rod 80 is at the second position, the third through hole 153 is located on the third direction C side with respect to the main cylinder axis J1, as shown in Fig. 5. Therefore, in plan view of the actuator unit 10 in the direction along the second axis Y, the second line segment L2 connecting the central axis of the third through hole 153 and the central axis of the fifth through hole 155 in the second link 120 is inclined with respect to the main cylinder axis J1. The inclination angle, or link angle, is 30 degrees or less, which is determined in advance. This characteristic fact and the degrees of the link angle when the sub-rod 80 is at the first position can suggest the following. In the present embodiment, the link angle is 30 degrees or less regardless of where the locking collar 60 is positioned.

### <How Second Actuator Works>

The following describes the advantageous effects of the present embodiment. The following first describes how the second actuator 12 works. The sub-rod 80 of the second actuator 12 protrudes beyond the circumferential wall 72 of the sub-cylinder 70, and the amount of the protrusion depends on the hydraulic pressure acting on the fluid chamber 98 of the sub-cylinder 70. At the same time, the position of the sub-rod 80 in the direction along the sub-cylinder axis J2 is changed between the first position and the second position.

It is assumed that a predetermined hydraulic pressure is acting within the fluid chamber 98. In this case, the hydraulic oil overcomes the elastic force produced by the spring member 91 and results in pressing the sub-piston 89, as well as the sub-rod body 82, toward the closure member 95. As a result, the sub-rod 80 is placed at the first position, which is shown in Fig. 4, in the direction along the sub-cylinder axis J2.

If the hydraulic pressure is drained from the fluid chamber 98, the spring member 91 exerts on the sub-piston 89 a force directed toward the bottom wall 74 of the sub-cylinder 70. As the spring member 91 exerts a force on the sub-piston 89, the sub-rod 80 moves toward the bottom wall 74 in the direction along the sub-cylinder axis J2. The sub-rod 80 then reaches the second position, which is shown in Fig. 5, in the direction along the sub-cylinder axis J2. At the second position, the sub-rod 80 protrudes beyond the circumferential wall 72 of the sub-cylinder 70 less than at the first position.

As described above, the sub-rod 80 moves between the first position and the second position depending on the hydraulic pressure acting on the fluid chamber 98. As shown in Fig. 4, when the sub-rod 80 is at the first position, the sub-cylinder axis J2 is parallel to the main cylinder axis J1. When the sub-rod 80 is at the second position, on the other hand, the sub-cylinder axis J2 is slightly tilted toward the third direction C with respect to the main cylinder axis J1 as shown in Fig. 5.

### <How Locking Mechanism Works>

The locking mechanism 20 of the first actuator 11, which is shown in Fig. 2, can lock the main rod 30 so that the main rod 30 becomes immovable or unlock the main rod 30, as the sub-rod 80 of the second actuator 12 moves between the first position and the second position. This function is described below.

As described above, the locking collar 60 of the locking mechanism 20 is movable relative to the main cylinder 50. As the sub-rod 80 moves, the first and second links 110 and 120 move in the manner described below, which results in the locking collar 60 moving relative to the main cylinder 50. Specifically, the locking collar 60 moves between a normal position and a locking position where the locking collar 60 protrudes beyond the circumferential wall 51 of the main cylinder 50 less than at the normal position.

As shown in Fig. 4, when the sub-rod 80 is at the first position, the locking collar 60 is at the normal position. As shown in Fig. 2, when the locking collar 60 is at the normal position, the inner surface 60A of the locking collar 60 is spaced away from the outer surface 25A of the locking member 25. In this case, the locking mechanism 20 is in a non-locking state where a gap is left between the inner surface of the locking member 25 and the main rod body 32.

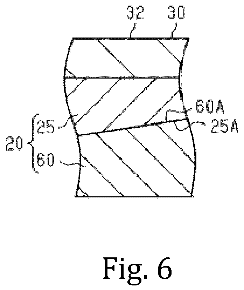

As shown in Fig. 5, when the sub-rod 80 is at the second position, the locking collar 60 is at the locking position where the locking collar 60 protrudes beyond the circumferential wall 51 less than at the normal position. As shown in Fig. 6, when the locking collar 60 is at the locking position, the inner surface 60A of the locking collar 60 is in contact with the outer surface 25A of the locking member 25. Specifically, when the locking collar 60 is at the locking position, the inner surface 60A of the locking collar 60 is pressed against the outer surface 25A of the locking member 25. As described above, the inner surface 60A of the locking collar 60 and the outer surface 25A of the locking member 25 are tapered relative to each other. Therefore, when the inner surface 60A of the locking collar 60 is pressed against the outer surface 25A of the locking member 25, the locking member 25 is pressed inwardly toward the main rod body 32 in the radial direction centered on the main rod body 32. As a result, the locking member 25 contacts the main rod body 32, thereby locking the main rod body 32 so that the main rod body 32 is immovable. In other words, when the locking collar 60 is at the locking position, the locking mechanism 20 immovably locks the main rod 30, or in the locking state. In the above-described manner, the locking mechanism 20 can restrict the main rod 30 from moving.

### <How First and Second Links Work>

The first and second links 110 and 120 function to transmit the power of the sub-rod 80 to the locking collar 60. In performing this function, the first and second links 110 and 120 gradually change their posture as the sub-rod 80 moves. The following describes how the respective links change their posture in relation with the position and movement of the sub-rod 80.

The following first describes the posture of the first link 110 when the sub-rod 80 is at the first position. As shown in Fig. 4, when the sub-rod 80 is at the first position, the second pin P2 is located on the first direction A side with respect to the first pin P1. When the sub-rod 80 is at the first position, the first pin P1, third pin P3, and fourth pin P4 are aligned with each other on the main cylinder axis J1 in plan view of the actuator unit 10 in the direction along the second axis Y, as described above.

As shown in Fig. 5, as a result of the sub-rod 80 moving from the first position to the second position, the protrusion of the sub-rod 80 beyond the sub-cylinder 70 is reduced. Therefore, the second pin P2, which is connected to the sub-rod 80, moves toward the sub-cylinder 70. At the same time, the first link 110 rotates on the first pin P1, so that the second through hole 152 moves toward the sub-cylinder 70. The first link 110 rotates until the second through hole 152 and second pin P2 reach the same position as the first pin P1 in the direction along the first axis X. As a result of this rotation, the third through hole 153 of the first link 110 moves toward the third direction C as well as the third pin P3. Together with the third pin P3, the fourth through hole 154 in the second link 120 rotates on the fourth pin P4 toward the third direction C. As a result of this rotation, the fifth hole 155 of the second link 120, and thus the fourth pin P4, moves toward the first pin P1. As the fourth pin P4 moves toward the first pin P1, the locking collar 60, which is fixedly attached to the fourth pin P4, moves toward the second direction B. In other words, the locking collar 60 moves such that the inner surface 60A of the locking collar 60 moves toward the outer surface 25A of the locking member 25 in the direction along the direct axis X. The locking collar 60 then reaches the locking position where the inner surface 60A of the locking collar 60 is pressed against the outer surface 25A of the locking member 25. In the manner descried above, the second link 120 converts the force that acts to move the third through hole 513, where the first link 110 is connected to the second link 120, toward the third direction C, into a force that acts to move the inner surface 60A of the locking collar 60 toward the outer surface 25A of the locking member 25 in the direction along the first axis X.

When the sub-rod 80 returns from the second position to the first position, the first and second links 110 and 120 rotate in the opposite direction to that described above. The locking collar 60 accordingly returns to the normal position, where the inner surface 60A of the locking collar 60 is separated from the outer surface 25A of the locking member 25. Thus, as the first and second links 110 and 120 reciprocate, the locking collar 60 reciprocates between the normal position and the locking position in the direction along the first axis X. The second actuator 12 is configured as the power source for feeding power to the first link 110 so that the first and second links 110 and 120 can reciprocate as described above.

<Advantageous Effects of the Embodiment>
(1) As described above, the first link 110 is V-shaped, and the extended dimeson of the first arm 111 is greater than that of the second arm 112. The first link 110 is configured to rotate on the first pin P1, which is located at the base end of the first and second arms 111 and 112. In this case, the first link 110 can use the principle of leverage, thereby increasing the force input to the first arm 111 and transmitting the increased force to the parts connected to the second arm 112. In other words, the first link 110 can increase the force input from the sub-rod 80 and transmit the increased force to the second link 120, and thus to the locking collar 60. According to the present embodiment, the force input from the second actuator 12 can be increased and then transmitted to the locking collar 60, so that an excessively large actuator is not necessary as the second actuator 12.
   Specifically, it is ensured that the locking collar 60 relating to the present embodiment can operate swiftly even if the force input from the sub-rod 80 to the first link 110 is reduced to some extent. Since only a low force is required to be input from the sub-rod 80 to the first link 110, the spring member 91, by which the sub-rod 80 can be operated, can be made smaller and lighter in the present embodiment. This contributes to reducing the size of the spring chamber 99, and thus the size of the sub-cylinder 70, eventually the size and weight of the second actuator 12.
(2) The first and second links 110 and 120 relating to the present embodiment constitute a linkage. Specifically, as the first link 110 rotates, the third through hole 153, where the first link 110 is connected to the second link 120, moves in the direction along the third axis Z, which causes the locking collar 60 to move in the direction along the first axis X. Such a linkage can efficiently amplify the force input from the sub-rod 80 and transmit the amplified force to the locking collar 60. Therefore, the present embodiment can suitably enjoy the advantageous effect (1).
(3) As described above, the link angle is 30 degrees or less regardless of where the locking collar 60 is positioned in the present embodiment. Due to the characteristics of the linkage, as the link angle is reduced toward zero degrees, the increase ratio of the output force to the input force rises. In the present embodiment, the first and second links 110 and 120 operate with the link angle being limited within a small range. Therefore, the first and second links 110 and 120 can very efficiently amplify the force input from the sub-rod 80 and output the amplified force to the locking collar 60. Therefore, the present embodiment can particularly suitably enjoy the advantageous effect (1).
(4) In the present embodiment, the first and second actuators 11 and 12 are arranged next to each other in the direction along the third axis Z. Therefore, the power of the sub-rod 80 of the second actuator 12 is exerted in the direction along the third axis Z to be transmitted to the locking collar 60 via the first link 110. Here, if the first line segment L1 connecting the first and second pins P1 and P2 is inclined with respect to the sub-cylinder axis J2, for example, when the sub-rod 80 is at the first position, the inclination may be transformed into a reduction in the component of force directed in the direction along the third axis Z. When the first line segment L1 is generally orthogonal to the sub-cylinder axis J2, for example, when the sub-rod 80 is at the second position, the power of the sub-rod 80 can be efficiently transmitted to the locking collar 60 via the first link 110. According to the present embodiment, when the sub-rod 80 is at the second position, i.e., when the locking collar 60 is in the locking position, the power of the sub-rod 80 can be more effectively applied to the locking collar 60. As a result, the main rod 30 can be locked tightly.
(5) An example case is assumed where an abnormality occurs in the aircraft's hydraulic system ad hydraulic pressure cannot be thus fed to the actuators. In this case, the position of the main rod 30 cannot be controlled using the fluid circuit. Therefore, the main rod 30 must be locked promptly to restrict the main rod 30 from moving. According to the present embodiment, the elastic force of the spring member 91 is used to move the sub-rod 80 from the first position to the second position, so that the main rod 30 can be locked. As the main rod 30 is locked using the elastic force of the spring member 91 in the present embodiment, an abnormality in the hydraulic system may cut off the supply of the hydraulic pressure to the sub-cylinder 70 but the elastic force of the spring member 91 can still act on the sub-rod 80 to lock the main rod 30.
(6) Aircrafts are required to swiftly respond to requests to lock or unlock the main rod 30, for example, to promptly stop the movement of the main rod 30 in case of an emergency. In this regard, the actuator unit 10 relating to the present embodiment is advantageously configured such that the locking collar 60 can be swiftly operated to lock or unlock the main rod 30, as described above. Therefore, the actuator unit 10 relating to the present embodiment can suitably achieve swift responses, which are required for aircrafts as described above.

### <Modification Examples>

The foregoing embodiment can be modified as described below. The above embodiment and the following modifications can be implemented in combination to the extent where they are technically consistent to each other.

The angle formed between the sub-cylinder axis J2 and the first line segment L1 is not limited to the range described in the foregoing embodiment. Even if the angle is out of the range described above, a reasonably high force can be exerted on the locking collar 60 due to the mechanism using the principle of leverage and the linkage. The same applies to the link angle. Specifically, the link angle is not limited to the range mentioned in the above embodiment.

The first actuator 11 can be configured in any other manners than described in the above embodiment. The first actuator 11 can be configured in any manner as long as the main rod 30 is movable in the direction along the central axis of the first actuator 11 and the first actuator 11 includes the locking mechanism 20 for locking the main rod 30. For example, the main rod body 32 of the first actuator 11 may protrude beyond the circumferential wall 51 of the main cylinder 50 toward both of the first and second directions A and B. As an alternative example, the first actuator 11 may be configured such that the main rod 30 can be actuated by a force produced by any other means than the hydraulic oil. The trunnions 54 may be located at the end of the circumferential wall 51 that faces the second direction B.

The locking mechanism 20 can be configured in any other manners than described in the above embodiment. For example, the locking member 25 may extend through the locking collar 60. The locking mechanism 20 may be configured in any manner as long as the main rod 30 can be locked by the tapered surfaces of the locking member 25 and locking collar 60 being pressed against each other.

The fluid circuit 220 can be configured in any other manners than described in the above embodiment. The fluid circuit 220 may be configured in any manner as long as it can apply the required fluid pressure to the fluid chamber 98. In regard to the second actuator 12, any other pressure media than the hydraulic oil can be used as long as they can exert a force on the sub-rod 80 against the elastic force produced by the spring member 91. For example, air may be used as the pressure medium.

Any other techniques than the pressure medium can be used to apply a force to the sub-rod 80 against the elastic force produced by the spring member 91. Some mechanical mechanism may be used. Any techniques can be employed as long as they can cause the sub-rod 80 to move from the second position to the first position against the elastic force produced by the spring member 91.

In relation with the second actuator 12, the source of the power for moving the sub-rod 80 from the first position to the second position is not limited to the spring member 91. The source of the power can be anything as long as it can move the sub-rod 80 from the first position to the second position.

The source of the power for operating the first links 110 is not limited to the actuator configured to operate the sub-rod 80 using the fluid pressure and the elastic force produced by the spring member 91. The source of the power for operating the first links 110 may be, for example, an electromechanical actuator that can cause the sub-rod 80 to reciprocate by using a conversion mechanism for converting rotational motion of a motor into the linear motion of the sub-rod 80. Such conversion mechanisms include a ball screw mechanism. The source of the power for operating the first links 110 can be anything as long as it can provide power for causing the first links 110 to reciprocate. Note that, as mentioned above, the principle of leverage, a linkage or other frameworks can be used to amplify the power from the power source and transmit the amplified power to the locking collar. From this perspective, a person may operate the first links 110 using a tool or the like during maintenance of the actuator unit 10, for example.

The first and second links 110 and 120 may be configured in the following manner. The first and second links 110 and 120 may be configured such that, as the sub-rod 80 moves, the first pin P1, third pin P3, and fourth pin P4, which are at the same position in the direction along the third axis Z, move. As a result, the third pin P3 is positioned on the opposite side to the third direction C side with respect to the first and fourth pins P1 and P4. In this case, the second link 120 converts the force acting to move the third through hole 153, where the first link 110 is connected to the second link 120, away from the third direction C side into the force acting to move the locking collar 60.

The second link mechanism can be configured in any other manners than described in the above embodiment. For example, the second link mechanism may be constituted by a plurality of link members, instead of only a single link member as described in the above embodiment. The second link mechanism does not have to be configured to convert the force acting to move the point of connection where the first link mechanism is connected to the second link mechanism toward one side or the other side in the direction along the third axis Z into the force acting to move the locking collar 60 in the direction along the first axis X. The second link mechanism can be configured in any manner as long as it can connect the first link mechanism and the locking collar 60 and cause the locking collar 60 to reciprocate as the first link mechanism reciprocate.

The first link mechanism can be configured in any other manners than described in the above embodiment. For example, the first link mechanism may be constituted by a plurality of link members, instead of only a single link member as described in the above embodiment. The first link mechanism is configured in any manner as long as it includes the first and second arms extending in different directions from the axis of rotation on which the first link mechanism rotates and the extended dimension of the first arm is greater than that of the second arm. As configured in this manner, the first link mechanism can use the principle of leverage to transmit a large output to the locking collar 60.

The first and second link mechanisms may be configured without a linkage for transmitting power. The actuator unit 10 can be applied to any other components than the flight control surface. Specifically, the actuator unit 10 may be used for operating other aircraft components than the flight control surface.

The actuator unit 10 can be installed at any other objects than aircrafts. The foregoing embodiments describe a plurality of physically separate constituent parts. They may be combined into a single part, and any one of them may be divided into a plurality of physically separate constituent parts. Irrespective of whether or not the constituent parts are integrated, they are acceptable as long as they are configured to solve the problems.

## Claims

1. An actuator unit (10) comprising:
a main rod (30) movable in an axial direction;
a lock mechanism (20) configured to restrict the main rod from moving;
a first link mechanism (110) rotatable on an axis of rotation (P1); and
a second link mechanism (120) connected to the first link mechanism and the lock mechanism,
wherein the locking mechanism includes:
a tubular locking member (25) into which the main rod is inserted, the locking member having an outer surface (25A) that is sloped such that a distance between a central axis of the main rod and the outer surface decreases toward one side in the axial direction; and
a tubular locking collar (60) into which the main rod and the locking member are inserted, the locking collar having an inner surface (60A) that is sloped such that a distance between the central axis of the main rod and the inner surface decreases toward one side in the axial direction,
wherein the first link mechanism includes:
a first arm (111) extending from the axis of rotation in a first direction when viewed in a direction parallel to the axis of rotation; and
a second arm (112) extending from the axis of rotation in a second direction different than the first direction when viewed in a direction parallel to the axis of rotation,
wherein the first arm is connected at a first connection point (P2) to a power source (12) for applying power to the first link mechanism,
wherein the second arm is connected at a second connection point (P3) to the second link mechanism,
wherein the second link mechanism is connected at a third connection point (P4) to the locking collar,
wherein the locking collar is configured to reciprocate in the axial direction as the first link mechanism rotates in a reciprocating manner, and
wherein, when viewed in a direction parallel to the axis of rotation, a distance from the first connection point to the axis of rotation is greater than a distance from the second connection point to the axis of rotation.

2. The actuator unit of claim 1, wherein the second link mechanism converts a force acting to move the second connection point in a direction orthogonal to the axial direction into a force acting to move the inner surface of the locking collar toward the outer surface of the locking member in the axial direction.

3. The actuator unit of claim 1 or 2, wherein, when viewed in a direction parallel to the axis of rotation, an acute angle formed between a line segment connecting the second and third connection points and the axial direction is 30 degrees or less regardless of where the locking collar is positioned.

4. The actuator unit of any one of claims 1 to 3,
wherein, when the locking mechanism is in a locking state, the outer surface of the locking member is in contact with the inner surface of the locking collar, and
wherein, when viewed in a direction parallel to the axis of rotation, an angle formed between a line segment connecting the first connection point and the axis of rotation and a direction of a force exerted by the power source on the first arm is from 85 degrees to 95 degrees when the locking mechanism is in the locking state.

5. The actuator unit of any one of claims 1 to 4,
wherein the power source includes an actuator serving, the actuator being configured to be operated by fluid pressure,
wherein the actuator has:
a cylinder (70) configured to receive a fluid therein;
a piston (89) configured to reciprocate within the cylinder;
a rod (80) connected to the piston and the first arm; and
a spring member (91) configured to apply a force to the piston, and
wherein, when the spring member applies a force to the piston to move the piston, the inner surface of the locking collar moves toward the outer surface of the locking member.

6. The actuator unit of any one of claims 1 to 5, wherein the main rod is configured to actuate a flight control surface of an aircraft.
